# EUROPEAN PATENT APPLICATION

(11) **EP 2 063 256 A1**
(43) Date of publication of application: **27.05.2009**
(21) Application number: 08020254.2
(22) Date of filing: 20.11.2008
(51) Int. Cl.: G01N 21/55, G01N 21/64

(54) **Fluorescence detecting method**

(30) Priority: 22.11.2007 JP 2007302421
(71) Applicant: FUJIFILM Corporation, Minato-ku Tokyo (JP)
(72) Inventor: Ohtsuka, Hisashi, Ashigarakami-gun Kanagawa-ken (JP)
(74) Representative: Vierheilig, Achim

(57) **Abstract**

Quantitative properties of fluorometry are secured in a fluorescence detecting method that utilizes plasmon enhancement, by preventing discoloration of fluorescent labels due to damage or deterioration.
Fine inorganic fluorescent particles (5) which do not become discolored are employed as fluorescent labels. Surface plasmon is generated in a thin metal plate (20), which is formed on a surface of a dielectric prism substrate (6). Evanescent light (22), which is enhanced by the electric field enhancement effect of the surface plasmon, is used to excite the fine inorganic fluorescent particles (5). The fluorescence emitted by the excited fine inorganic fluorescent particles is detected.

## Description

### BACKGROUND OF THE INVENTION

### Field of the Invention

The present invention is related to a fluorescence detecting method. More particularly, the present invention is related to a fluorescence detecting method that utilizes surface plasmon.

### Description of the Related Art

Fluorometry is conventionally used in for biological measurements and the like, as an easy and highly sensitive measuring method. In fluorometry, a sample, which is considered to contain a detection target substance that emits fluorescence when excited by light having a specific wavelength, is irradiated with an excitation light beam of the aforementioned specific wavelength. The presence of the detection target substance can be confirmed by detecting the fluorescence due to the excitation. In the case that the detection target substance is not a fluorescent substance, a substance labeled by a fluorescent substance that specifically bonds with the detection target substance is caused to contact the sample. Thereafter, fluorescence is detected in the same manner as described above, thereby confirming the presence of the bond, that is, the detection target substance.

With recent advances in the performance of photodetectors, such as cooled CCD's, fluorometry has become indispensable in biological research. In addition, fluorescent pigments having fluorescence quantum yields that exceed 0.2, which is the standard for practical use, such as FITC (fluorescence: 525nm, fluorescence quantum yield: 0.6) and Cy5 (fluorescence: 680nm, fluorescence quantum yield: 0.3) have been developed as fluorescent labeling materials and are being widely used.

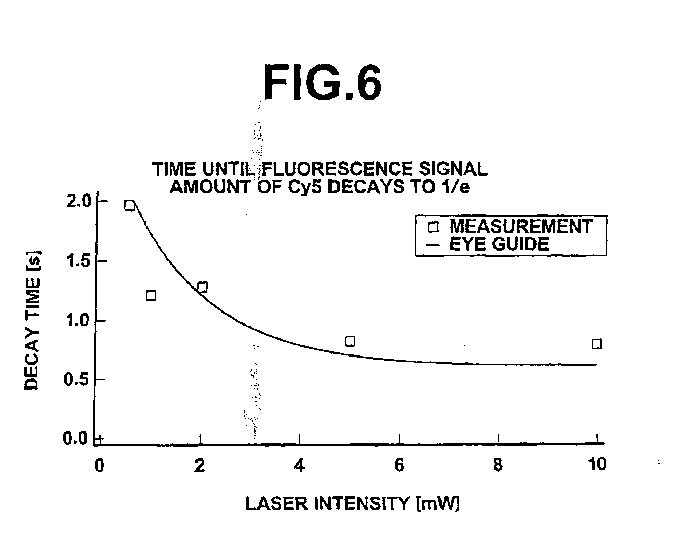

However, as reported in "Effects of Atmospheric Ozone on Microarray Data Quality", T.L. Fare et al., Analytical Chemistry, Vol. 75, Issue 17, pp. 4672-4675, 2003,organic fluorescent pigments absorb and emit visible light, and have weak n links in their chemical structures due to these properties. Therefore, organic fluorescent pigments become irreversibly damaged by intense light, or deteriorate from chemical reactions with oxygen and ozone in the atmosphere. When the organic fluorescent pigments become irreversibly damaged or deteriorate, there is a problem that the total fluorescent intensity emitted thereby decreases, that is, discoloration occurs, over time. As illustrated in Figure 6, in the case of Cy5 pigment, which is widely used, when light intensity is increased to the mW class level, the number of Cy5 pigments that contribute to light emission is halved within several seconds. The discoloration of organic fluorescent pigments is particularly conspicuous in surface plasmon fluorometry methods that utilize the electric field amplifying effect of plasmon, which are gaining attention recently. This becomes a factor that causes large fluctuations in actually detected fluorescent intensity depending on the intensity of excitation light and the measurement environment, regardless of the fact that the number of organic fluorescent pigments is the same. There is little influence on the measurement results in cases that fluorescence detection is performed in a simple ON/OFF manner. However, in cases that quantitative measurements are required, the discoloration of organic fluorescent pigments becomes a large problem.

Meanwhile, quantum dots are known as pigments in which discoloration does not occur. Quantum dots employ inorganic particles having particle sizes of 100nm or less, and therefore are significantly stronger that organic fluorescent pigments. However, the fluorescent quantum yield of quantum dots is low, and therefore quantum dots are not suited for detection at high sensitivity.

### SUMMARY OF THE INVENTION

The present invention has been developed in view of the foregoing circumstances. It is an object of the present invention to provide a fluorescence detecting method that prevents discoloration of fluorescent labels due to damage and discoloration to enable quantitative detection at high sensitivity, by utilizing the high durability of inorganic fluorescent particles and the electric field enhancement effect of surface plasmon.

A first fluorescence detecting method of the present invention comprises the steps of:
(A) supplying a sample that includes a detection target substance labeled with fine inorganic fluorescent particles to a detecting portion that includes a thin metal film formed on a surface of a dielectric prism substrate;
(B) causing an excitation light beam of a wavelength that causes the fine inorganic fluorescent particles to emit light to enter the interface between the dielectric prism substrate and the thin metal film through the dielectric prism substrate such that conditions for total internal reflection are satisfied, to cause evanescent light to be generated at the interface and to cause surface plasmon to be generated within the thin metal film by resonance with the evanescent light; and
(C) exciting the fine inorganic fluorescent particles with the evanescent light, which is enhanced by the electric field enhancement effect of the surface plasmon, and detecting the fluorescence emitted by the fine inorganic fluorescent particles.
   A second fluorescence detecting method of the present invention comprises the steps of:
(D) immobilizing a specific binding substance that specifically binds to a detection target substance which is included in a sample, onto a detecting portion that includes a thin metal film formed on a surface of a dielectric prism substrate, and supplying the sample to cause the detection target substance to bind with the specific binding substance;
(E) supplying fine inorganic fluorescent particles, which have been treated such that they specifically bind to the detection target substance, causing the fine inorganic fluorescent particles to bind to the detection target substance following step (D);
(F) causing an excitation light beam of a wavelength that causes the fine inorganic fluorescent particles to emit light to enter the interface between the dielectric prism substrate and the thin metal film through the dielectric prism substrate such that conditions for total internal reflection are satisfied, to cause evanescent light to be generated at the interface and to cause surface plasmon to be generated within the thin metal film by resonance with the evanescent light; and
   (G) exciting the fine inorganic fluorescent particles, which are immobilized on the detecting portion, with the evanescent light, which is enhanced by the electric field enhancement effect of the surface plasmon, and detecting the fluorescence emitted by the fine inorganic fluorescent particles.
   A third fluorescence detecting method of the present invention comprises the steps of:
   (D) immobilizing a specific binding substance that specifically binds to a detection target substance which is included in a sample, onto a detecting portion that includes a thin metal film formed on a surface of a dielectric prism substrate, and supplying the sample to cause the detection target substance to bind with the specific binding substance;
   (H) supplying fine inorganic fluorescent particles, which have been treated such that they specifically bind to the specific binding substance, causing the fine inorganic fluorescent particles and the detection target substance to bind to the specific binding substance in a competitive manner following step (D);
   (F) causing an excitation light beam of a wavelength that causes the fine inorganic fluorescent particles to emit light to enter the interface between the dielectric prism substrate and the thin metal film through the dielectric prism substrate such that conditions for total internal reflection are satisfied, to cause evanescent light to be generated at the interface and to cause surface plasmon to be generated within the thin metal film by resonance with the evanescent light; and
   (G) exciting the fine inorganic fluorescent particles, which are immobilized on the detecting portion, with the evanescent light, which is enhanced by the electric field enhancement effect of the surface plasmon, and detecting the fluorescence emitted by the fine inorganic fluorescent particles.
   In the present specification, the "detecting portion" is where the sample and the like are supplied. The detecting portion is provided such that when the excitation light beam enters the interface between the dielectric prism substrate and the thin metal film through the dielectric prism substrate such that conditions for total internal reflection are satisfied, evanescent light is caused to be generated at the interface and causes surface plasmon to be generated within the thin metal film by resonance with the evanescent light.

The "specific binding substance" refers to substances that bind to specific substances, such as chelators with respect to proteins, and antigens with respect to antibodies.

The specific binding substance is provided to enable two types of fluorometry, as will be described below. A first type of fluorometry is the "sandwich method". In the sandwich method, the detection target substance is an antigen, for example. In this case, the specific binding substance is a primary antibody to the antigen. The antigens are caused to bind with the primary antibodies, which are immobilized on the substrate. Thereafter, the antigens are labeled with fluorescent labels via secondary antibodies (linkers which are labeled with fluorescent labels). The fluorescence from the fluorescent labels, that is, from locations at which the antigens are present, is detected. A second type of fluorometry is the "competitive method". In the competitive method, the specific binding substance is an epitope (antigen determining group) that specifically binds with both linkers, which are provided on the fluorescent labels, and with the detection target substance. The detection target substance and the fluorescent labels are caused to bind with the specific binding substance in a competitive manner, to immobilize the detection target substance and the fluorescent labels on the detecting portion. Then, the fluorescence from the fluorescent labels, which are immobilized on the detecting portion, is detected. That is, fluorescence is detected from locations at which the antigens are not present. These two types of fluorometry can be executed by selecting linkers provided on the fluorescent labels and specific binding substances according to detection conditions.

In the fluorescence detecting method of the present invention, it is desirable for the fine inorganic fluorescent particles to be formed by at least one of: a semiconductor material; a magnetic material; and a metal material. It is also desirable for the fine inorganic fluorescent particles to be fluorescent quantum dots having particle diameters of 80nm or less. Further, it is desirable for the fine inorganic fluorescent particles to have a core shell type structure, with a coating such as a silica (SiOₓ) coating. It is particularly desirable for the fine inorganic fluorescent particles to include an inorganic material selected from a group consisting of: ZnSe; ZnTe; CdS; CdSe; CdTe; GaAs; Si; Ag; Au; Fe; Pt; and Co.

It is desirable for a non flexible film of a hydrophobic material to be formed at a film thickness within a range of 10 to 100nm on the thin metal film of the detecting portion. In this case, it is desirable for the non flexible film to be constituted by a polymer material.

Here, the term "non flexible" refers to a degree of rigidity that does not result in deformation such that the film thickness of the non flexible film changes during normal use of a fluorescence sensor.

The fluorescence detecting method of the present invention employs the fine inorganic fluorescent particles, which have high durability with respect to light. Thereby, discoloration due to damage and deterioration of the fluorescent labels can be prevented. In addition, the electric field enhancement effect of surface plasmon is utilized, to amplify the amount of obtainable fluorescent signals. Thereby, a fluorescence detecting method capable of quantitative measurements at high sensitivity is realized.

Further, the fine inorganic fluorescent particles can be used for observations over longer periods of time compared with organic pigments. Therefore, observation of living tissue and cells over time becomes possible.
In addition, it is possible to change the light emitting wavelength of fine inorganic fluorescent particles formed by the same material without changing the wavelength of excitation light, by varying the particle diameters thereof. Also, the fine inorganic fluorescent particles have steeper fluorescent spectrum distributions than organic pigments. Accordingly, simultaneous analysis employing labels that emit fluorescence of different wavelengths is facilitated.

### BRIEF DESCRIPTION OF THE DRAWINGS

Figure 1 is a schematic partial sectional view of a fluorescence sensor, which is used to execute a fluorescence detecting method according to a first embodiment of the present invention.
Figure 2A and Figure 2B are schematic views that illustrate the steps of the fluorescence detecting method of the first embodiment.
Figure 3 is a schematic partial sectional view of a fluorescence sensor that executes a fluorescence detecting method according to the second embodiment of the present invention.
Figures 4A, 4B, 4C, 4D, and 4E are schematic views that illustrate the steps of the fluorescence detecting method of the second embodiment.
Figures 5A, 5B, 5C, 5D, and 5E are schematic views that illustrate the steps of the fluorescence detecting method of the third embodiment.
Figure 6 is a graph that illustrates the relationship between the time that elapses until fluorescent signal amounts of Cy5 decay to 1/e and the intensity of excitation light.

### BEST MODE FOR CARRYING OUT THE INVENTION

Hereinafter, embodiments of the present invention will be described with reference to the attached drawings. However, the present invention is not limited to the embodiments described below.

### Fluorescence Detecting Method

### <First Embodiment>

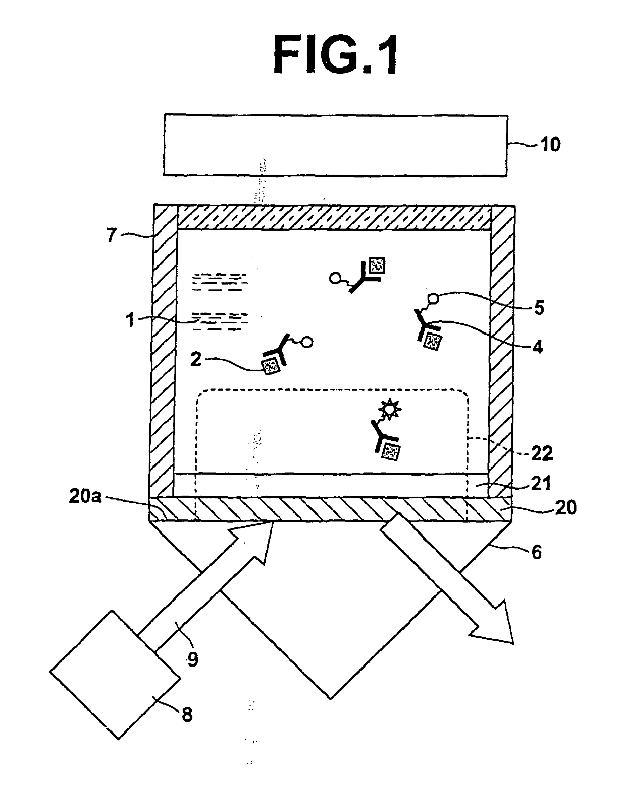

Figure 1 is a schematic partial sectional view of a fluorescence sensor, which is used to execute a fluorescence detecting method according to a first embodiment of the present invention. The fluorescence sensor is employed to detect antigens 2 as detection target substances from a sample 1 that contains the antigens 2.

As illustrated in Figure 1, the fluorescence sensor is equipped with: a light source 8 that emits an excitation light beam 9 of a predetermined wavelength; a dielectric prism dielectric prism substrate 6 formed by a material that transmits the excitation light beam 9, provided to cause the excitation light beam 9 to propagate therethrough from a first side thereof; a thinmetal film 20, provided on a second side of the dielectric prism substrate 6; a non flexible film 21 which is formed on the thin metal film 20; a sample holding section 7 that holds the sample 1 such that the sample 1 contacts the non flexible film 21; and a photodetector 10 which is provided at a position outside the sample holding section 7 and at which light emission of fine inorganic fluorescent particles 5 within the sample 1 can be detected. Figure 1 also illustrates the fine inorganic fluorescent particles 5, and linkers 4 (secondary antibodies 4) provided on the fine inorganic fluorescent particles 5. The linkers are provided to impart specifically binding properties to the fine inorganic fluorescent particles 5.

The excitation light beam 9 is not particularly limited, and may be a single wavelength light beam emitted from a laser light source or the like, or a broad spectrum light beam emitted from a white light source. The type of light beam to be employed as the excitation light beam 9 may be appropriately selected according to detection conditions.

The light source 8 is not particularly limited, and may be a laser light source. The type of light source to be employed as the light source 8 may be appropriately selected according to detection conditions. The light source 8 maybe combined with a light guiding optical system constituted by mirrors, lenses, and the like, to guide the excitation light beam toward an interface 20a between the dielectric prism substrate 6 and the thin metal film 20, as appropriate.

The dielectric prism substrate 6 may be formed by transparent materials such as transparent resins and glass. It is desirable for the dielectric prism substrate 6 to be formed by resin. In the case that the dielectric prism substrate 6 is formed by resin, polymethyl methacrylate (PMMA), polycarbonate (PC), and non crystalline polyolefin (APO) that includes cycloolefin may be favorably employed.

The material of the thin metal film 20 is not particularly limited, and may be selected appropriately according to detection conditions. However, it is desirable for Au, Ag, Pt, and the like to be employed, from the viewpoint of generation conditions for surface plasmon. The method for producing the thin metal film 20 is not particularly limited, and may be selected appropriately according to detection conditions and materials to be utilized. Examples of the method for producing the thin metal film 20 include: sputtering; vapor deposition; plating; a coating method that uses a metal colloid, and spraying. The film thickness of the thin metal film 20 is also not particularly limited, and may be selected appropriately according to detection conditions. However, it is desirable for the film thickness to be within a range from 20nm to 60nm, from the viewpoint of generation conditions for surface plasmon.

Examples of materials for the non flexible film 21 include silicon oxide and polymer materials. From the viewpoints of film forming conditions and surface processing conditions, it is desirable for polymer materials to be employed. In this case, a simple method, such as the spin coat method, may be employed to produce the non flexible film 21. The non flexible film 21 is formed by a hydrophobic material in the present invention. Therefore, molecules that cause light loss, such as metal ions and dissolved oxygen, which are present within the sample 1, are prevented from entering the interior of the non flexible film 21. Accordingly, the excitation energy of the excitation light beam 8 can be prevented from being robbed by these molecules.

As a specific material of the non flexible film 21, one that has a difference in the coefficient of linear (thermal) expansion compared to the material of the dielectric prism substrate 6 within a range of 35x10⁻⁶ is desirable. Such a material maybe selected from among those listed in Table 1.

**TABLE 1**

| Material | Coefficient of Linear (Thermal) Expansion (×10⁻⁶) |
|---|---|
| Water | 70 |
| Polystyrene | 70 |
| PMMA | 70 |
| Polycarbonate | 60 |
| Cycloolefin | |
| (Zeonex^{™} 330R) | 90 |
| Cycloolefin | |
| (Zeonex^{™} E48R) | 60 |
| Quartz (SiO₂) | 0.6 |
| BK7 | 7.1 |
| Gold | 14 |

The reason why the difference in coefficients of linear (thermal) expansion is limited to within 35x10⁻⁶ will be described below.

To improve stability with respect to environmental changes, and particularly temperature, it is preferable for the non flexible film 21 and the dielectric prism substrate 6 to have similar coefficients of thermal expansion. That is, if the coefficients of thermal expansion of the two components are different to a great degree, separation or decrease in the degree of close contact becomes likely when temperature changes occur. Specifically, it is desirable for the difference between the coefficients of linear (thermal) expansion of the two components to be within a range of 35×10⁻⁶. Note that the thin metal film 20 is provided between the non flexible film 21 and the dielectric prism substrate 6. When temperature changes occur, the thin metal film 20 expands and contracts along with the non flexible film 21 above and the dielectric prism substrate 6 below. Therefore, the fact remains that it is preferable for the coefficients of thermal expansion of the non flexible film 21 and the dielectric prism substrate 6 to be similar. In consideration of the above points, in the case that the non flexible film 21 is formed by a polymer material, it is preferable to select resin as the material of the dielectric prism substrate 6 over glass.

Meanwhile, the film thickness of the non flexible film 21 is set to be within a range from 10nm to 100nm. The lower and upper limits of the film thickness are set to 10nm and 100nm for the following reasons.

Light loss occurs in molecules of fluorescent substances which are present in the vicinity of metal, due to energy transition to the metal. The degree of energy transition is inversely proportionate to the distance between the molecules and the metal to the third power in the case that the metal is a plane which is infinitely thick. The degree of energy transition is inversely proportionate to the distance between the molecules and the metal to the fourth power in the case that the metal is a plane which is infinitely thin. The degree of energy transition is inversely proportionate to the distance between the molecules and the metal to the sixth power in the case that the metal is in the form of fine particles. As taught in the aforementioned document by W. Knoll et al., it is desirable for a distance of several nm or greater, preferably 10nm or greater, to be secured between the metal and the fluorescent substance molecules in the case that the metal is a metal film. Accordingly, the lower limit of the film thickness is set to 10nm in the present invention. On the other hand, the fluorescent substance molecules are excited by near field light which leak from the surface of the metal film and which are enhanced by surface plasmon. The range of travel (distance from the surface of the metal film) of near field light is at most approximately one wavelength, and it is known that the electric field intensity thereof attenuates drastically at an exponential rate corresponding to the distance from the surface of the metal film. When this relationship is calculated for visible light having a wavelength of 635nm, it can be seen that leakage of the evanescent wave occurs only for a distance approximately corresponding to the wavelength (635nm), and the electric field intensity drops drastically beyond 100nm. It is desirable for the electric field that excites the fluorescent substance molecules to be as great as possible. Therefore, it is desirable to set the distance between the surface of the metal film and the fluorescent substance molecules to be 100nm or less, to perform effective excitation. Accordingly, the upper limit of the film thickness is set to 100nm in the present invention.

In the case that the non flexible film 21 is formed by a polymer, proteins and the like which are present as detection target substances 2 may be easily non specifically adsorbed onto polymers. This is due to a hydrophobic effect caused by the polymer and the proteins being hydrophobic. In this case, the non specific adsorption of the proteins becomes causes for deteriorations in quantitative detection of fluorescence. Therefore, it is desirable for hydrophilic surface modifications to be provided on the surface of the non flexible film 21. The hydrophilic surface modifications may function as linkers to immobilize specific binding substances, in addition to the above function of preventing non specific adsorption.

The shape and the material of the sample holding section 7 is not particularly limited, as long as it is capable of holding the sample 1 such that the sample 1 is in contact with the detecting portion (more accurately, the non flexible film 21 in the first embodiment), and as long as it does not interfere with detection of the fluorescence emitted by the fine inorganic fluorescent particles. In the case that the fluorescence is detected from above, the sample holding section. 7 may be formed with side surfaces that do not transmit light and an upper surface that transmits light, as illustrated in Figure 1, for example. Here, the side surfaces that do not transmit light are employed to shield light from the exterior from entering the sample holding section 7.

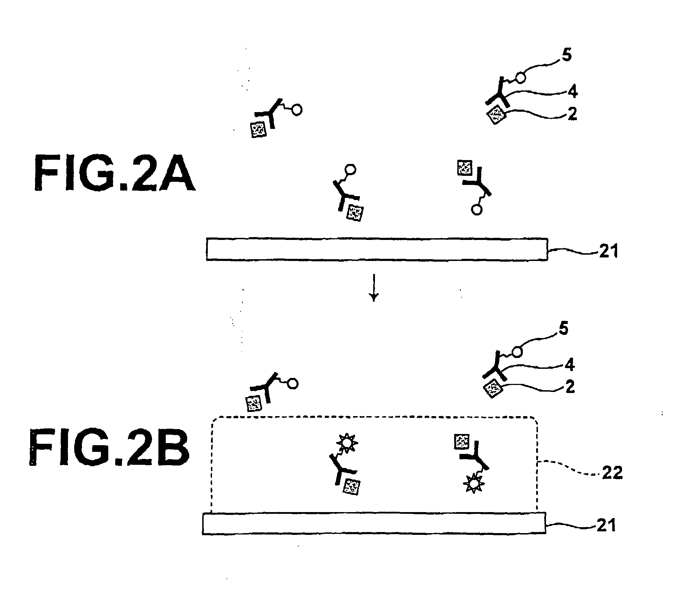

The photodetector 10 detects extremely weak fluorescence of a specific wavelength emitted by the fine inorganic fluorescent particles 5. LAS-1000 plus by FUJIFILM KK may be employed as the photodetector 10. However, the photodetector 10 is not limited to the above, and may be selected appropriately according to detection conditions. Examples of alternative photodetectors include: CCD's; PD's (photodiodes); photoelectron multipliers; and c-MOS's. The fluorescence detecting method according to the first embodiment of the present invention includes the steps of:
(A) supplying the sample 1 that includes the detection target substance 2 labeled with the fine inorganic fluorescent particles 5 to the detecting portion that includes the thin metal film 20 formed on a surface of the dielectric prism substrate 6 (Figure 2A);
(B) causing the excitation light beam 9 of a wavelength that causes the fine inorganic fluorescent particles 5 to emit light to enter the interface 20a between the dielectric prism substrate 6 and the thin metal film 20 through the dielectric prism substrate 6 such that conditions for total internal reflection are satisfied, to cause evanescent light 22 to be generated at the interface 20a and to cause surface plasmon to be generated within the thin metal film 20 by resonance with the evanescent light 22; and
(C) exciting the fine inorganic fluorescent particles 5 with the evanescent light 22, which is enhanced by the electric field enhancement effect of the surface plasmon, and detecting the fluorescence emitted by the fine inorganic fluorescent particles 5 (Figure 2B).
   The fine inorganic fluorescent particles 5 are not particularly limited, and may be selected appropriately according to detecting conditions (particularly the wavelength of the excitation light beam), but fluorescent quantum dots are desirable. Particularly, it is desirable for the fine inorganic fluorescent particles 5 to include an inorganic material selected from a group consisting of: ZnSe; ZnTe; CdS; CdSe; CdTe; GaAs; Si; Ag; Au; Fe; Pt; and Co. It is further desirable for the fine inorganic fluorescent particles 5 to have a core shell type structure, with a coating such as a silica (SiOₓ) coating. In the case that the wavelength of the excitation light beam 9 is 532nm, for example, quantum dots having SiOₓ shells and CdSe cores may be employed. Japanese Unexamined Patent Publication No. 2005-074552 and "Photochemical Fine-Tuning of Luminescent Color of Cadmium Selenide Nanoparticles: Fabricating a Single-Source Multicolor Luminophore", T. Torimoto et al., Journal of Physical Chemistry B, Vol. 110, No. 27, pp. 13314-13318, 2006, disclose methods for producing quantum dots having SiOₓ shells and CdSe cores.

In the case that quantum dots having SiOₓ shells and CdSe cores are employed, the surfaces of the SiOₓ shell/CdSe core quantum dots may be modified with monoclonal antibodies 4 (secondary antibodies 4), to enable the SiOₓ shell/CdSe core quantum dots quantum dots to specifically bind with the antigens 2. The method by which the antibodies are introduced to the SiOₓ shell/CdSe core quantum dots includes the following steps (1) through (4).
(1) Modification of SiOₓ shell/CdSe core quantum dots with silane coupling agent having functional groups at the ends thereof. With respect to metal oxide and nitride base materials such as silica, silicon nitride, or base materials having thin metal oxide films or thin nitride films as coatings, linking is possible via a silane coupling layer formed by a silane coupling agent. By utilizing a silicon containing compound represented by the following General Formula (1) as the silane coupling agent, covalent bonds such as metal (silicon) - oxygen - silicon - carbon can be formed, and the surfaces of the base materials can be coated with the functional groups.

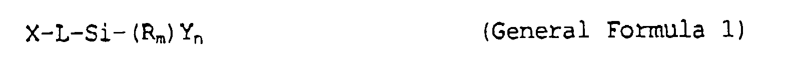

   In General Formula (1), X represents a functional group; L represents a linker portion including a carbon chain, such as a straight chain, a branched chain, and a cyclic chain; R represents a hydrogen atom or an alkyl group having a carbon number from 1 to 6; and Y represents a hydrolysis group. In addition, m and n each represents an integer from 0 to 3, wherein m+n=3. Examples of the hydrolysis group Y include: alkoxy groups; halogen; and acyloxy groups. Specific examples include: methoxy groups; ethoxy groups; and chlorine. Specific Examples of the silane coupling agent include: γ-aminopropyl trimethoxysilane; N-β (aminoethyl) γ-aminopropyl trimethoxysilane; γ-aminopropyl methyl diethoxy silane; γ-mercaptopropyl trimethoxy silane; and γ-glycidoxypropyl triethoxy silane. Known reaction methods may be used for the silane coupling agent, for example, those disclosed in Silane Coupling Agents: Effects and Uses, Science and Technology Co. The functional groups (X) of a self assembled monolayer forming compound and the silane coupling agent are not particularly limited as long as they bonds with bioactive substances. Examples of such functional groups include: amino groups; carboxyl groups; hydroxyl groups; aldehyde groups; thiol groups; isocyanate groups; isothiocyanate groups; epoxy groups; cyano groups; hydrazino groups; hydrazide groups; vinyl sulfone groups; vinyl groups; and derivatives thereof. These functional groups may be used singly or in combination. In the first embodiment, carboxyl groups are employed as the functional groups (X), to cause amine coupling to occur with the amino groups of the antibodies, thereby performing immobilization/covalent bonding. The above amine coupling method comprises the following steps (2) through (4), for example. Note that the following example is for a case in which a 30µl cuvette/cell is employed.
(2) Activation of -COOH Groups at the Ends of Linkers 30µl of a solution containing equal volumes of a 0.1M NHS (N-hydrooxysuccinimide) solution and a 0.4M EDC (1-ethyl-3-(3-dimethylamminopropyl) carbodiimide) solution are added, and left still at room temperature for 30 minutes.
(3) Immobilization of Primary Antibodies 4 Cleansing is performed five times with a PBS buffer (pH: 7.4). Then, 30µl of a solution containing the primary antibodies (500ug/ml) is added, and left still for 30 to 60 minutes at room temperature.
(4) Blocking of Non Reacted -COOH Groups Cleansing is performed five times with a PBS buffer (pH: 7.4) . Then, 30µl of a 1M ethanol amine solution (pH: 8.5) is added, and left still for 20 minutes at room temperature. Thereafter, cleansing is performed five times with a PBS buffer (pH: 7.4). It is not necessary for the excitation light beam 9 to enter the interface 20a between the dielectric prism substrate 6 and the thin metal film 20 such that conditions for total internal reflection are satisfied, as long as the enhanced evanescent light 22 is generated in step (B). That is, fine apertures having diameters less than or equal to the wavelength of the excitation light beam 9 may be formed in the thin metal film 20. Thereby, surface plasmon can be generated without the excitation light beam being totally internally reflected at the interface 20a. In this case, the need for expensive dielectric prism substrates and complex incident light optical systems is obviated, and is advantageous from the viewpoint of cost reduction. Hereinafter, the operation of the first embodiment will be described. First, the sample 1 that includes the detection target substance 2 labeled with the fine inorganic fluorescent particles 5 is supplied to the sample holding section 7. Then, the excitation light beam 9 emitted by the light source 8 is caused to enter the interface 20a between the dielectric prism substrate 6 and the thin metal film 20 through the dielectric prism substrate 6 such that conditions for total internal reflection are satisfied. At this time, the evanescent light 22 is generated at the interface 20a and surface plasmon is generated within the thin metal film 20 by resonance with the evanescent light 22. Thereafter, the fine inorganic fluorescent particles 5 are excited by the evanescent light 22, which is enhanced by the electric field enhancement effect of the surface plasmon. The excited fine inorganic fluorescent particles 5 emit fluorescence of a predetermined wavelength, and the antigens 2 can be detected by detecting the emitted fluorescence. In the above example, the presence of the fine inorganic fluorescent particles 5 is actually confirmed by the detection of fluorescence. However, it is considered that the fine inorganic fluorescent particles 5 are bonded to the antigens 2 by a preliminary process. Therefore, the presence of the antigens 2 is indirectly confirmed by confirming the presence of the fine inorganic fluorescent particles 5. As described above, the fine inorganic fluorescent particles, which have high durability with respect to light, are utilized. Thereby, discoloration due to damage and deterioration of the fluorescent labels can be prevented. In addition, the electric field enhancement effect of surface plasmon is utilized, to amplify the amount of obtainable fluorescent signals. Further, the fine inorganic fluorescent particles can be used for observations over longer periods of time compared with organic pigments. Therefore, observation of living tissue and cells over time becomes possible. In addition, it is possible to change the light emitting wavelength of fine inorganic fluorescent particles formed by the same material without changing the wavelength of excitation light, by varying the particle diameters thereof. Also, the fine inorganic fluorescent particles have steeper fluorescent spectrum distributions than organic pigments. Accordingly, simultaneous analysis employing labels that emit fluorescence of different wavelengths is facilitated. Further, the non flexible film 21 is provided, to prevent energy transfer from the fine inorganic fluorescent particles 5 to the thin metal film 20 to cause metallic light loss. Therefore, the excited fine inorganic fluorescent particles 5 can be efficiently caused to emit light. Note that the evanescent light 22 only reaches regions within several hundred nanometers from the interface 20a. Therefore, it is considered that the percentage of fine inorganic fluorescent particles 5 which are actually excited by the evanescent light 22 is small. This is because the pairs of fine inorganic fluorescent particles 5 and antigens 2 are uniformly dispersed within the sample 1 due to Brownian motion, and there is a limit to the number of fluorescent labels 5 which are within the extremely short propagation distance of the evanescent light 22. A second embodiment and a third embodiment of the present invention, described below, address this problem.

### <Second Embodiment>

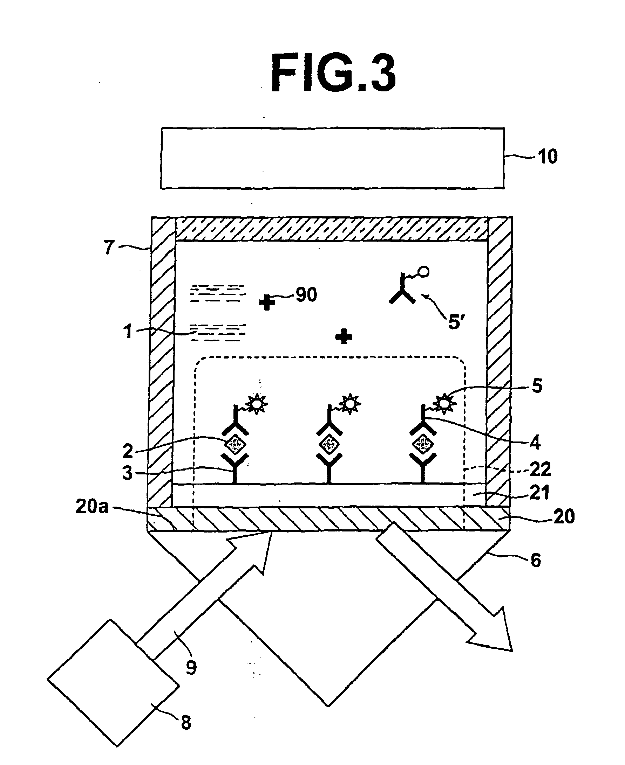

Figure 3 is a schematic partial sectional view of a fluorescence sensor that executes a fluorescence detecting method according to the second embodiment of the present invention. The fluorescence sensor is employed to detect antigens 2 as detection target substances from a sample 1 that contains the antigens 2. The fluorescence sensor of the second embodiment is the same as the fluorescence sensor of the first embodiment which was described with reference to Figure 1, except that a hydrophilic surface modification (not shown) is administered on the non flexible film 21, and primary antibodies 3 are immobilized on the modified hydrophilic surface of the non flexible film 21. The other components which are the same as those of the fluorescence sensor of the first embodiment will be denoted with the same reference numerals, and detailed descriptions thereof will be omitted insofar as they are not particularly necessary.

The primary antibodies 3 are not particularly limited, and may be appropriately selected according to detection conditions. For example, in the case that the antigens 2 are CRP antigens (molecular weight: 110,000 Da), monoclonal antibodies (having at least different epitopes from the secondary antibodies 4) that specifically bind with the antigens 2 may be employed as the primary antibodies 3. The primary antibodies 3 may be immobilized onto the non flexible film 25, which is formed by a polymer material, by the amine coupling method via PEG's having carboxylized ends. Thereby, the antigens 2 can be immobilized on the non flexible film 21. The amine coupling method comprises the following three steps, for example. Note that the following example is for a case in which a 30µl cuvette/cell is employed.
(1) Activation of -COOH Groups at the Ends of Linkers
   30µl of a solution containing equal volumes of a 0.1M NHS (N-hydrooxysuccinimide) solution and a 0.4M EDC (1-ethyl-3-(3-dimethylamminopropyl) carbodiimide) solution are added to the non flexible film 25, and left still at room temperature for 30 minutes.
(2) Immobilization of Primary Antibodies
   Cleansing is performed five times with a PBS buffer (pH: 7.4). Then, 30µl of a solution containing the primary antibodies (500ug/ml) is added, and the non flexible film 25 is left still for 30 to 60 minutes at room temperature.
(3) Blocking of Non Reacted -COOH Groups

Cleansing is performed five times with a PBS buffer (pH: 7.4) . Then, 30µl of a 1M ethanol amine solution (pH: 8.5) is added, and the non flexible film 25 is left still for 20 minutes at room temperature. Thereafter, cleansing is performed five times with a PBS buffer (pH: 7.4).

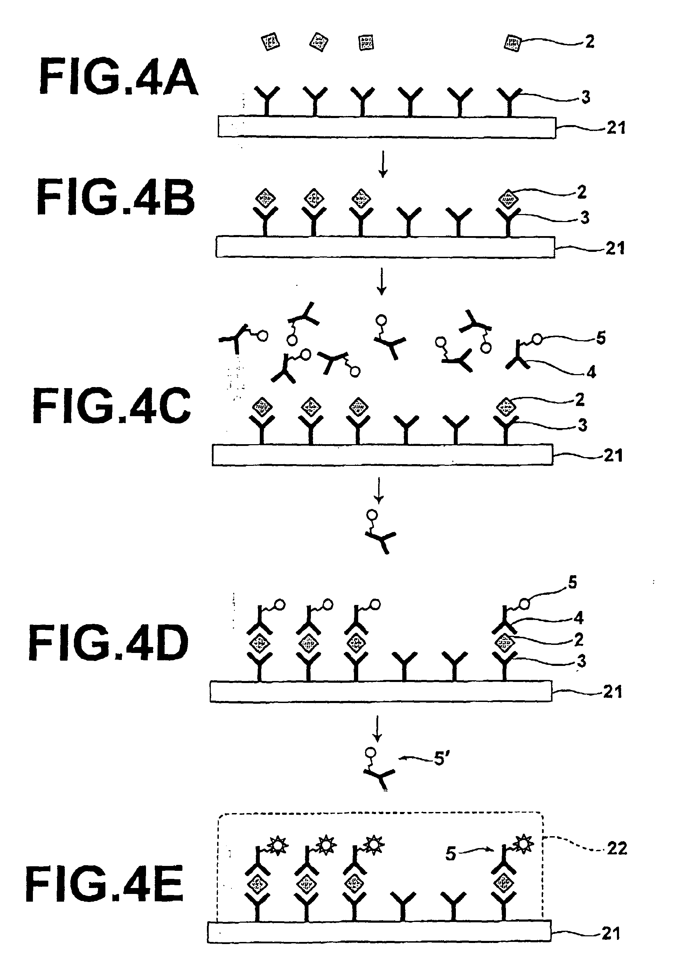

The fluorescence detecting method according to the second embodiment of the present invention includes the steps of:
(D) immobilizing the primary antibodies 3 onto the detecting portion that includes the thin metal film 20 formed on a surface of the dielectric prism substrate 6 via the hydrophilic surface modifications, and supplying the sample 1 containing the antigens 2 (Figure 4A) to cause the antigens 2 to bind with the primary antibodies 3 (Figure 4B);
(E) supplying the fine inorganic fluorescent particles 5 (Figure 4C), causing the fine inorganic fluorescent particles 5 to bind to the antigens 2, which are bonded to the primary antibodies 3, via the secondary antibodies 4 to immobilize the fine inorganic fluorescent particles 5 to the detecting portion by the sandwich method following step (D) (Figure 4D);
(F) causing the excitation light beam 9 of a wavelength that causes the fine inorganic fluorescent particles 5 to emit light to enter the interface 20a between the dielectric prism substrate 6 and the thin metal film 20 through the dielectric prism substrate 6 such that conditions for total internal reflection are satisfied, to cause the evanescent light 22 to be generated at the interface and to cause surface plasmon to be generated within the thin metal film 20 by resonance with the evanescent light 22; and
(G) exciting the fine inorganic fluorescent particles 5, which are immobilized on the detecting portion, with the evanescent light 22, which is enhanced by the electric field enhancement effect of the surface plasmon, and detecting the fluorescence emitted by the fine inorganic fluorescent particles 5 (Figure 4E).
   In step (D), it is preferable for the sample 1 and the fine inorganic fluorescent particles 5 to be caused to flow over the detecting portion when they are supplied. This is to reduce the influence exerted by the detection target substance 2 and the fine inorganic fluorescent particles 5 which are not immobilized onto the detecting portion. In this case, the sample 1 is supplied first.
   Hereinafter, the operation of the second embodiment will be described. The primary antibodies 3 that specifically bind with the antigens 2 are immobilized on the non flexible film 25. The sample 1 is caused to flow within the sample holding section 7, and the antigens 2 bind to the primary antibodies 3 and become immobilized onto the non flexible film 25 (Figure 4B). Next, the fine inorganic fluorescent particles which have been treated to specifically bind to the antigens 2 are caused to flow within the sample holding section 7 (Figure 4C). The fine inorganic fluorescent particles are immobilized on the detecting portion via the antigens 2, which are bonded to the primary antibodies 3, and the secondary antibodies 4 (the sandwich method).
   Then, the excitation light beam 9 emitted by the light source 8 is caused to enter the interface 20a between the dielectric prism substrate 6 and the thin metal film 20 through the dielectric prism substrate 6 such that conditions for total internal reflection are satisfied. At this time, the evanescent light 22 is generated at the interface 20a and surface plasmon is generated within the thin metal film 20 by resonance with the evanescent light 22. Thereafter, the fine inorganic fluorescent particles 5 are excited by the evanescent light 22, which is enhanced by the electric field enhancement effect of the surface plasmon. The excited fine inorganic fluorescent particles 5 emit fluorescence of a predetermined wavelength, and the antigens 2 can be detected by detecting the emitted fluorescence. By the fluorescence detecting method described above, advantageous effects similar to those obtained by the first embodiment can be obtained. As described previously, the evanescent light 22 only reaches regions within several hundred nanometers from the interface 20a. Therefore, it is considered that the percentage of fine inorganic fluorescent particles 5 which are actually excited by the evanescent light 22 is small, in a state in which the pairs of fine inorganic fluorescent particles 5 and antigens 2 are uniformly dispersed within the sample 1 due to Brownian motion. However, the pairs of antigens 2 and fine inorganic fluorescent particles 5 are collected at the detection section by using the primary antibodies 3 in the second embodiment. Thereby, the amount of fine inorganic fluorescent particles 5 which are excited by the evanescent light 22 can be increased. Therefore, a greater intensity of fluorescence can be obtained, and as a result, highly quantitative fluorescence detection is enabled.
   The surface of the non flexible film 21 is covered by the hydrophilic surface modifications. Therefore, non specific adsorption due to the hydrophobic effect of proteins and the like can be prevented, and the S/N ratio of measurement can be improved.
   Further, the extremely short propagation distance of the evanescent light 22 is effective in improving the S/N ratio, because the influence of light scattering due to impurities 90 in the sample and fluorescent emissions from floating fluorescent labels 5' can be reduced.
   In the above example as well, the presence of the fine inorganic fluorescent particles 5 is actually confirmed by the detection of fluorescence. However, as in the first embodiment, it is considered that the fine inorganic fluorescent particles 5 would flow away from the detecting portion if they are not bonded to the antigens 2. Therefore, the presence of the antigens 2 is indirectly confirmed by confirming the presence of the fine inorganic fluorescent particles 5.

### <Third Embodiment>

A fluorescence sensor which is utilized to execute the fluorescence detecting method according to a third embodiment of the present invention is the same as that which is utilized to execute the fluorescence detecting method of the second embodiment, illustrated in Figure 3. In the third embodiment, however, secondary antibodies 4', which are provided on the fine inorganic fluorescent particles 5, do not bind with the antigens 2, but rather specifically bind with the primary antibodies 3. That is, the fine inorganic fluorescent particles 5 and the antigens 2 bind with the primary antibodies 3 in a competitive manner.

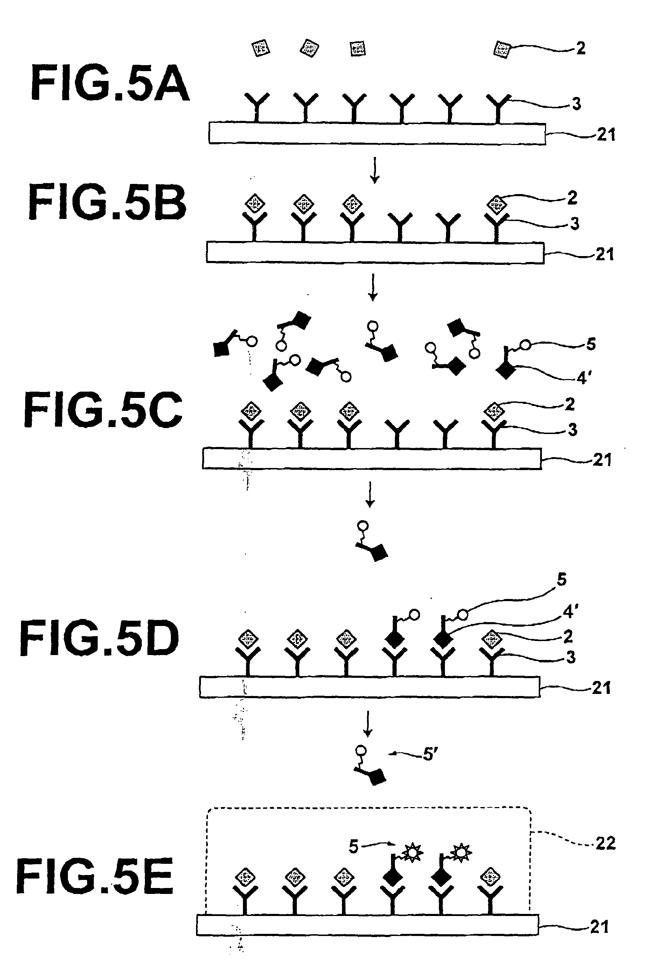

The fluorescence detecting method according to the third embodiment of the present invention includes the steps of:
(D) immobilizing the primary antibodies 3 onto the detecting portion that includes the thin metal film 20 formed on a surface of the dielectric prism substrate 6 via the hydrophilic surface modifications, and supplying the sample 1 containing the antigens 2 (Figure 5A) to cause the antigens 2 to bind with the primary antibodies 3 (Figure 5B);
(H) supplying fine inorganic fluorescent particles 5 (Figure 5C), to bind with the primary antibodies 3, to which the antigens 2 are not bonded, in the so called competitive manner via the secondary antibodies 4' following step (D), to immobilize the fine inorganic fluorescent particles 5 onto the detecting portion (Figure 5D);
(F) causing the excitation light beam 9 of a wavelength that causes the fine inorganic fluorescent particles 5 to emit light to enter the interface 20a between the dielectric prism substrate 6 and the thin metal film 20 through the dielectric prism substrate 6 such that conditions for total internal reflection are satisfied, to cause the evanescent light 22 to be generated at the interface and to cause surface plasmon to be generated within the thin metal film 20 by resonance with the evanescent light 22; and
(G) exciting the fine inorganic fluorescent particles 5, which are immobilized on the detecting portion, with the evanescent light 22, which is enhanced by the electric field enhancement effect of the surface plasmon, and detecting the fluorescence emitted by the fine inorganic fluorescent particles 5 (Figure 5E). The fluorescence detecting method according to the third embodiment of the present invention differs from the second embodiment in that the fine inorganic fluorescent particles 5 bind with the primary antibodies 3 in a competitive manner with the antigens 2. Thereby, fluorescence is emitted from locations at which the antigens 2 are not present. That is, the greater the number of antigens 2 in the sample the less the amount of the fine inorganic fluorescent particles 5 which are immobilized onto the detecting portion, and consequently, the amount of detected fluorescence decreases. However, the basic operation is the same as the fluorescence detecting method of the second embodiment. Accordingly, similar advantageous effects can be obtained.
   Note that antigen/antibody reactions have been described in the above embodiments. However, the present invention is not limited to this configuration, and other reactions that utilize specific binding properties can be employed to achieve the objective of the present invention.

### <Embodiment>

A 50nm thick thin metal film 20 was formed by sputtering on a prism substrate 6 (refractive index: 1.50) by ZEONEX. Further, a 20nm thick polystyrene polymer film 21 (refractive index: 1.59) was formed on the thin metal film 20 by the spin coat method. The antigens 2 were CRP antigens (molecular weight: 110,000 Da), and monoclonal antibodies 3 for binding with the CRP antigens 2 were immobilized onto the polymer film 21 by the amine coupling method, via PEG's having carboxylized ends.

Meanwhile, SiOₓ shell/CdSe core quantum dots were employed as the fine inorganic fluorescent particles 5. The surfaces of the SiOₓ shell/CdSe core quantum dots were modified with the monoclonal antibodies 4 (having different epitopes from the monoclonal antibodies 3).

A semiconductor laser that emits an excitation light beam 9 having a wavelength of 532nm was used as the light source 8. LAS-1000 plus by FUJIFILM KK was employed as the photodetector 10.

A fluorescence detecting method was executed using the following steps (D) through (G).

(D) immobilizing the monoclonal antibodies 3 onto the detecting portion that includes the thin metal film 20 formed on a surface of the dielectric prism substrate 6 via the hydrophilic surface modifications, and supplying the sample 1 containing the CRP antigens 2 to cause the CRP antigens 2 to bind with the monoclonal antibodies 3 (Figure 4B);

(E) supplying the SiOₓ shell/CdSe core quantum dots 5, causing the SiOₓ shell/CdSe core quantum dots 5 to bind to the CRP antigens 2, which are bonded to the monoclonal antibodies 3, via the monoclonal antibodies 4 to immobilize the SiOₓ shell/CdSe core quantum dots 5 to the detecting portion by the sandwich method;

(F) causing the excitation light beam 9 having a wavelength of 532nm to enter the interface 20a between the dielectric prism substrate 6 and the thin metal film 20 through the dielectric prism substrate 6 such that conditions for total internal reflection are satisfied, to cause the evanescent light 22 to be generated at the interface and to cause surface plasmon to be generated within the thin metal film 20 by resonance with the evanescent light 22; and

(G) exciting the SiOₓ shell/CdSe core quantum dots 5, which are immobilized on the detecting portion, with the evanescent light 22, which is enhanced by the electric field enhancement effect of the surface plasmon, and detecting the fluorescence emitted by the SiOₓ shell/CdSe core quantum dots 5.

## Claims

1. A fluorescence detecting method, comprising the steps of:
supplying a detection target substance (2) and fluorescent labels (5) to a detecting portion that includes a thin metal film (20) formed on a surface of a dielectric prism substrate (6);
irradiating an excitation light beam (9) of a wavelength that causes the fluorescent labels (5) to emit light onto the detecting portion, to cause evanescent light (22) to be generated; and
exciting the fluorescent labels (5) with the evanescent light (22) and detecting the amount of the detection target substance (2) based on the intensity of fluorescence emitted by the excitation of the fluorescent labels; **characterized by**:
fine inorganic fluorescent particles being employed as the fluorescent labels (5).

2. A fluorescence detecting method as defined in Claim 1, **characterized by** comprising the steps of:
(A) supplying the detection target substance (2) labeled with the fine inorganic fluorescent particles (5) to the detecting portion;
(B) causing the excitation light beam (9) to enter the interface (20a) between the dielectric prism substrate (6) and the thin metal film (20) through the dielectric prism substrate (6) such that conditions for total internal reflection are satisfied, to cause evanescent light (22) to be generated at the interface (20a) and to cause surface plasmon to be generated within the thin metal film (20) by resonance with the evanescent light (22); and
(C) exciting the fine inorganic fluorescent particles (5) with the evanescent light (22), which is enhanced by the electric field enhancement effect of the surface plasmon, and detecting the fluorescence emitted by the fine inorganic fluorescent particles, (5).

3. A fluorescence detecting method as defined in Claim 1, **characterized by** comprising the steps of:
(D) immobilizing a specific binding substance (3) that specifically binds to the detection target substance (2) which is included in a sample, onto the detecting portion, and supplying the sample to cause the detection target substance (2) to bind with the specific binding substance (3);
(E) supplying the fine inorganic fluorescent particles (5), which have been treated such that they specifically bind to the detection target substance (2), causing the fine inorganic fluorescent particles (5) to bind to the detection target substance (2) following step (D);
(F)causing the excitation light beam (9) to enter the interface (20a) between the dielectric prism substrate (6) and the thin metal film (20) through the dielectric prism substrate (6) such that conditions for total internal reflection are satisfied, to cause evanescent light (22) to be generated at the interface (20a) and to cause surface plasmon to be generated within the thin metal film (20) by resonance with the evanescent light (22); and
(G)exciting the fine inorganic fluorescent particles (5), which are immobilized on the detecting portion, with the evanescent light (22), which is enhanced by the electric field enhancement effect of the surface plasmon, and detecting the fluorescence emitted by the fine inorganic fluorescent particles (5).

4. A fluorescence detecting method as defined in Claim 1, **characterized by** comprising the steps of:
(D) immobilizing a specific binding substance (3) that specifically binds to the detection target substance (2) which is included in a sample, onto the detecting portion, and supplying the sample to cause the detection target substance (2) to bind with the specific binding substance (3);
(H) supplying the fine inorganic fluorescent particles (5), which have been treated such that they specifically bind to the specific binding substance (3), causing the fine inorganic fluorescent particles (5) and the detection target substance (2) to bind to the specific binding substance (3) in a competitive manner following step (D);
(F) causing the excitation light beam (9) to enter the interface (20a) between the dielectric prism substrate (6) and the thin metal film (20) through the dielectric prism substrate (6) such that conditions for total internal reflection are satisfied, to cause evanescent light (22) to be generated at the interface (20a) and to cause surface plasmon to be generated within the thin metal film (20) by resonance with the evanescent light (22); and
(G) exciting the fine inorganic fluorescent particles (5), which are immobilized on the detecting portion, with the evanescent light (22), which is enhanced by the electric field enhancement effect of the surface plasmon, and detecting the fluorescence emitted by the fine inorganic fluorescent particles (5).

5. A fluorescence detecting method as defined in any one of Claims 1 through 4, wherein:
the fine inorganic fluorescent particles (5) are formed by at least one of: a semiconductor material; a magnetic material; and a metal material.

6. A fluorescence detecting method as defined in any one of Claims 1 through 5, wherein:
the fine inorganic fluorescent particles (5) are fluorescent quantum dots having particle diameters of 80nm or less.

7. A fluorescence detecting method as defined in any one of Claims 1 through 6, wherein:
the fine inorganic fluorescent particles (5) have a core shell type structure.

8. A fluorescence detecting method as defined in any one of Claims 1 through 7, wherein:
the fine inorganic fluorescent particles (5) include an inorganic material selected from a group consisting of : ZnSe; ZnTe; CdS; CdSe; CdTe; GaAs; Si; Ag; Au; Fe; Pt; and Co.

9. A fluorescence detecting method as defined in any one of Claims 1 through 8, wherein:
the detecting portion further comprises a non flexible film (21) formed by a hydrophobic material at a thickness within a range from 10 to 100nm, on the thin metal film (20).

10. A fluorescence detecting method as defined in Claim 9, wherein:
the non flexible film (21) is formed b a polymer material.
